**Europäisches Patentamt**

**European Patent Office**

**Office européen des brevets**

(19)

(11) Veröffentlichungsnummer: **0 041 190**
**A2**

# (12) EUROPÄISCHE PATENTANMELDUNG

(21) Anmeldenummer: 81103922.1

(22) Anmeldetag: 21.05.81

(51) Int. Cl.³: **H 02 K 9/19**
**H 02 K 55/04**

(30) Priorität: 02.06.80 DE 3020831

(43) Veröffentlichungstag der Anmeldung:
09.12.81 Patentblatt 81/49

(84) Benannte Vertragsstaaten:
CH FR GB LI

(71) Anmelder: SIEMENS AKTIENGESELLSCHAFT Berlin
und München
Postfach 22 02 61
D-8000 München 22(DE)

(72) Erfinder: Intichar, Lutz, Dr.
Max-Busch-Strasse 12
D-8520 Erlangen(DE)

(72) Erfinder: Schnapper, Christoph Dr. Dipl.-Phys.
Lachnerstrasse 63
D-8520 Erlangen(DE)

(72) Erfinder: Weghaupt, Erich
Rathenaustrasse 10
D-4330 Mülheim/Ruhr(DE)

(54) **Einrichtung zur Kühlung einer supraleitenden Erregerwicklung und eines Dämpferschildes des Läufers einer elektrischen Maschine.**

(57) Ein Einrichtung zur Kühlung einer supraleitenden Erregerwicklung im Läufer einer elektrischen Maschine, insbesondere eines Turbogenerators, ist mit einem Kühlmittelraum, der ein über eine Zuführungsleitung in ihn eingeleitetes kryogenes Kühlmittel zur Kühlung der Erregerwicklung enthält und an dessen Dampfraum eine nach außerhalb des Läufers führende, mit einem drehmomentübertragenden Läuferkörperteil thermisch verbundene Abgasleitung angeschlossen ist, und mit einer Kühlmittelleitung längs eines gegenüber der Erregerwicklung thermisch isolierten Dämpferschildes versehen. Bei einer solchen Kühleinrichtung soll die Abführung von aufgrund von Verlusten in dem Dämpferschild hervorgerufenem Kühlmitteldampf aus dem Läufer erleichtert werden, ohne daß damit eine wesentliche Erwärmung des die Erregerwicklung kühlenden Kühlmittels verbunden ist. Gemäß der Erfindung ist hierzu vorgesehen, daß die Kühlmittelleitung (24,25) des Dämpferschildes (21) ein Teilstück der Kühlmittelabgasleitung ist und daß dieses Teilstück in Strömungsrichtung des Kühlmittelabgases $(B_1, B_2)$ gesehen vor dem mit dem drehmomentübertragenden Läuferkörperteil (4) thermisch verbundenen Leitungsteil (28,32) der Kühlmittelabgasleitung angeordnet ist.

./...

EP 0 041 190 A2

FIG1

SIEMENS AKTIENGESELLSCHAFT          Unser Zeichen

Berlin und München                  VPA 80 P 7 5 3 4 E

Einrichtung zur Kühlung einer supraleitenden Erregerwicklung und eines Dämpferschildes des Läufers einer
elektrischen Maschine

Die Erfindung bezieht sich auf eine Einrichtung zur Kühlung einer supraleitenden Erregerwicklung im Läufer einer elektrischen Maschine, insbesondere eines Turbogenerators, mit mindestens einem Kühlmittelraum, der im Betriebszustand eine dampfförmige und eine flüssige Phase eines von außerhalb des Läufers zugeführten kryogenen Kühlmittels enthält, mit durch die Erregerwicklung verlaufenden Kühlmittelwegen, die an den von der flüssigen Phase eingenommenen Flüssigkeitsraum des Kühlmittelraumes angeschlossen sind, mit mindestens einer nach außerhalb des Läufers führenden Kühlmittelabgasleitung, die an den von der gasförmigen Phase eingenommenen Dampfraum des Kühlmittelraumes angeschlossen ist und die mit einem stirnseitigen Endstück eines drehmomentübertragenden, hohlzylinderförmigen Läuferkörperteiles thermisch verbunden ist, und mit mindestens einer Kühlmittelleitung längs eines um die Erregerwicklung angeordneten, tiefzukühlenden Dämpferschildes, der im Bereich der supraleitenden Erregerwicklung an dem drehmomentübertragenden Läuferkörperteil angeordnet und der gegenüber der Erregerwicklung durch einen hohlzylindrischen Körper aus festem Isolationsmaterial thermisch isoliert ist. Eine derartige Kühleinrichtung ist aus dem Bericht des Electric Power Research Institute, USA:

"EPRI EL-577, Project 429-1, Final Report", November 1977, Seiten 3-258 bis 3-270 bekannt.

Slm 2 Hag / 28. 5. 1980

Die supraleitende Erregerwicklung eines Generators muß während des Betriebs der Maschine auf so tiefer Temperatur gehalten werden, daß ihre Supraleiter nicht in den normalleitenden Zustand übergehen. Im allgemeinen ist deshalb eine Kühlung der Wicklung mit flüssigem Helium als kryogenem Kühlmittel vorgesehen, wobei die in den Supraleitern entstehende Verlustwärme und die von außen über die stirnseitigen Endstücke der drehmomentübertragenden Teile des Läuferkörpers eingeleitete Wärme zu einem teilweisen Verdampfen von Kühlmittel führen. Der in den Tieftemperaturbereich des Läufers eingeleitete Wärmestrom kann jedoch nach dem Prinzip einer Gegenstromkühlung stark vermindert werden, wenn das verdampfte, aber noch kalte Kühlmittelabgas in gutem Wärmekontakt an den drehmomentübertragenden Endstücken dieser Läuferkörperteile entlanggeführt wird, dort einen großen Teil der einströmenden Wärme aufnimmt, sich dabei erwärmt und als warmes Gas den Läufer an einem Anschlußkopf verläßt.

In der supraleitenden Erregerwicklung selbst entsteht unter anderem dann Verlustwärme, wenn die Supraleiter einem magnetischen Wechselfeld ausgesetzt sind. Im Läufer eines Generators tritt dies z.B. dann auf, wenn nicht alle Stromphasen der Ständerwicklung gleichmäßig belastet sind, ferner nach einer Kurzschlußfortschaltung oder bei Pendelungen, bei denen die Läuferdrehzahl vorübergehend mit der vorbestimmten Netzfrequenz nicht völlig übereinstimmt. Um in solchen transienten Betriebszuständen die Wechselfeldamplituden an den Supraleitern klein zu halten, kann die supraleitende Erregerwicklung von einem oder mehreren Dämpferschilden umgeben werden, die das Magnetfeld abschirmen und gleichzeitig Pendelungen dämpfen. Zur Abschirmung von niederfrequenten Feldern sind auf tiefer Temperatur gehaltene Dämpferschilde aus thermisch und elektrisch gut leitendem Material günstig. In einem Dämpferschild entsteht nämlich beim stationären Generatorbetrieb praktisch keine Verlustwärme. Nur während der verhältnismäßig kurzen transienten Betriebsfälle, insbesondere bei Pendelungen, wird vorübergehend eine sehr große Verlustwärme frei. Dabei darf, im Gegensatz zu den Supraleitern der Erregerwicklung, deren Temperatur auch während der transienten Betriebsfälle unter der Sprungtemperatur ihres supraleitenden Materials bleiben muß, die Temperatur des kalten Dämpfers stärker anwachsen, beispielsweise auf 20 bis 30 K.

Bei dem aus dem genannten EPRI-Bericht bekannten Turbogenerator mit einer Kühleinrichtung der eingangs ausgeführten Art ist eine von einem solchen kalten Dämpferschild umgebene supraleitende Erregerwicklung vorgesehen. Dieser Generator enthält einen zentralen Kühlmittelraum, der durch eine flüssige und gasförmige Phase des von außen in ihn eingeleiteten Kühlmittels Helium in einen achsfernen Flüssigkeitsraum und einen achsnahen Dampfraum unterteilt ist. Bei der Kühlung der Erregerwicklung mit aus dem Flüssigkeitsraum entnommenem flüssigen Helium wird ein sogenannter Selbstpumpeffekt ausgenutzt, wie er z.B. beschrieben ist in der Dissertation von A.Bejan: "Improved thermal Design of the Cryogenic Cooling System for a Superconducting Synchronous Generator", Ph.D.-Thesis, Massachusetts Institute of Technology (USA), Dezember 1974, Seiten 148 bis 159. Der Dämpferschild der aus dem EPRI-Berich bekannten Maschine ist auf der Außenseite eines drehmomentübertragenden Tragzylinders des Läuferkörpers befestigt, in dem einzelne Kanäle vorhanden sind, welche als Dämpferkühlkanäle dienen.
Zu dieser indirekten Kühlung des Dämpferschildes wird
flüssiges Helium verwendet, welches aus den zu der
supraleitenden Erregerwicklung führenden Kühlmittelwegen abgeleitet ist. Die Strömung in den Dämpferkühlkanälen ist aufgrund eines sogenannten Thermosiphon-Effektes hervorgerufen: In dem kalten Dämpferschild erzeugte Wärme durchdringt nämlich den Tragzylinder, gelangt in das in seinen Kühlkanälen befindliche Helium und facht dort eine Konvektion an.
Aufgrund dieser Konvektion fließt das erwärmte Helium
in ein im Zentrum des Läufers vorhandenes Heliumbad
zurück, wo eine entsprechende Menge an flüssigem
Helium verdampft. Während die flüssige Phase dieses
Heliumbades gegenüber dem Flüssigkeitsraum des zentralen
Kühlmittelraumes abgetrennt ist, bildet der Verdampfungsraum dieses Bades einen Teilraum des Dampfraumes des
zentralen Kühlmittelraumes. Aus diesem Dampfraum wird
verdampftes Helium über Abgasleitungen aus dem Läufer abgeführt, die sich in thermischer Verbindung
mit den stirnseitigen Endstücken der drehmomentübertragenden Läuferkörperteile befinden. Dabei wird das
Kühlmittelabgas auf etwa Raumtemperatur überführt,
wobei sich die drehmomentübertragenden Endstücke nach
dem Gegenstromprinzip abkühlen.

Bei dieser bekannten Kühleinrichtung ist zwar gewährleistet, daß die Wärme aus dem kalten Dämpferschild nicht direkt in den Bereich der supraleitenden
Erregerwicklung gelangt, da die Dämpferkühlkanäle
gegenüber den Wicklungskühlkanälen durch einen
festen hohlzylindrischen Isolationskörper thermisch
isoliert sind. Bei dieser Kühleinrichtung treten jedoch bei einem transienten Betriebsfall aufgrund
einer damit verbundenen Erwärmung des Dämpferschildes wegen des guten Wärmeüberganges von dem Tragzylinder
in das in seinen Kühlkanälen befindliche Helium sehr
schnell verhältnismäßig große Kühlmittelabgasmengen
auf, die zunächst in den Dampfraum des zentralen
Kühlmittelraumes gelangen. Eine schnelle Abführung
dieser Abgasmengen durch die mit den drehmomentübertragenden Endstücken des Läuferkörperteiles verbundenen Abgasleitungen ist jedoch erschwert, da
diese Leitungen einen verhältnismäßig kleinen Strömungsquerschnitt haben. Der Druck in dem zentralen
Kühlmittelraum steigt dann dementsprechend an. Die
Folge davon ist auch ein Ansteigen der Sättigungstemperatur des zur Kühlung der supraleitenden Erregerwicklung verwendeten Heliums in dem Flüssigkeitsraum
und damit der Temperatur der Wicklung selbst. Diese
Kühleinrichtung, bei der für eine effektive Kühlung
des Dämpferschildes verhältnismäßig viel flüssiges
Kühlmittel verbraucht wird, ist deshalb auch nur
für Generatoren kleinerer Leistung zu verwenden.

Ein weiterer Turbogenerator mit einer supraleitenden
Erregerwicklung und zwei tiefzukühlenden Dämpferschilden ist aus dem Bericht von M.T.Brown et al.
mit dem Titel "Rotor Cooling System for a 10 MVA
Superconducting Generator" aus: Proceedings of the
1979 Cryogenic Engineering Conference, Madison
(Wisconsin), USA, 21.-24.8.1979, Paper IC 9, bekannt.
Bei der Kühleinrichtung dieser Maschine sind die Kühlung der Dämpferschilde und die Wicklungskühlung weitgehend voneinander getrennt. Dementsprechend ist
neben einem zentralen Kühlmittelraum zur Aufnahme
des zur Kühlung der supraleitenden Erregerwicklung
erforderlichen Kühlmittels noch eine besondere Kühlmittelvorratskammer vorgesehen, in der das zur Kühlung der Dämpferschilde erforderliche flüssige Helium gespeichert wird. Außerdem ist in dem Kühlmittelkreislauf zur Dämpferschildkühlung ein Phasenseparator zur Abtrennung von gasförmigen Heliumanteilen vorgesehen. Wenn nun in den Dämpferschilden
plötzlich Wärme frei wird, bildet sich aufgrund
einer Thermosiphon-Wirkung ein Kühlmittelkreislauf
von dem in der Kühlmittelvorratskammer vorhandenen
Heliumbad durch den ersten Dämpferschild zu dem Phasenseparator und anschließend durch den zweiten Dämpferschild zurück zu dem Heliumbad aus. Durch die Wärmezufuhr entsteht dabei in dem Heliumbad der Kühlmittelvorratskammer und in dem Phasenseparator Heliumdampf,
der durch besondere Gasaustrittsöffnungen und ferner
durch einen in dem Separator vorhandenen Notausgang
entweichen kann. Ein Rückflußventil in der Verbindung
zwischen der Kühlmittelvorratskammer und dem das Kühlmittelbad für die Wicklung enthaltenden Kühlmittelraum
verhindert dabei, daß der Druckanstieg in der Kühlmittelvorratskammer auf das Kühlmittelbad der Wicklung zurückwirken kann. Über dieses Ventil wird ferner
ein Nachfüllen der Kühlmittelvorratskammer mit flüssigem
Helium ermöglicht. Zur Kühlung der Endstücke des drehmomentübertragenden Läuferkörperteiles dieser Maschine
dient Abgas aus der Kühlmittelvorratskammer und dem
Phasenseparator. Bei dieser konstruktiv aufwendigen
Kühleinrichtung besteht jedoch die Schwierigkeit,
daß der Heliumdampf, der in dem Kühlmittelbad der
Wicklung gebildet wird, solange nicht entweichen kann,
wie das Rückflußventil der Kühlmittelvorratskammer
geschlossen ist. Dann kann aber der Druck und damit
die Temperatur des für die Kühlung der Erregerwicklung vorgesehenen Kühlmittels ansteigen. Außerdem
wird auch bei dieser Kühleinrichtung verhältnismäßig
viel flüssiges Helium für eine effektive Kühlung der
Dämpferschilde benötigt.

Aufgabe der vorliegenden Erfindung ist es deshalb, die Kühleinrichtung der eingangs genannten Art zu vereinfachen und ihren Kühlmittelverbrauch zu senken. Dennoch soll der aufgrund von Verlusten in dem Dämpferschild hervorgerufene Kühlmitteldampf aus dem Läufer abzuführen sein, ohne daß damit eine wesentliche Erwärmung des für die Kühlung der Erregerwicklung vorzusehenden flüssigen Kühlmittels verbunden ist.

Diese Aufgabe wird erfindungsgemäß dadurch gelöst, daß die Kühlmittelleitung des Dämpferschildes ein Teilstück der Kühlmittelabgasleitung ist und daß dieses Teilstück der Kühlmittelabgasleitung in Strömungsrichtung des Kühlmittelabgases gesehen vor dem mit dem stirnseitigen Endstück des drehmomentübertragenden Läuferkörperteiles thermisch verbundenen Leitungsteil der Kühlmittelabgasleitung angeordnet ist.

Die Vorteile dieser Gestaltung einer Kühleinrichtung bestehen insbesondere darin, daß mit der Serienschaltung der Kühlung der Erregerwicklung, der Kühlung des Dämpferschildes sowie der Kühlung des drehmomentübertragenden Endstückes des Läuferkörperteiles sowohl im stationären Betrieb wie auch bei instationären Betriebsfällen eine sichere Kühlung gewährleistet ist, bei der verhältnismäßig wenig flüssiges Helium benötigt wird. Außerdem ist die Kühleinrichtung mit dieser Serienschaltung der einzelnen Kühlungen verhältnismäßig einfach, da an dem Kühlmittelanschlußkopf des Läufers lediglich eine einzige Kühlmittelzuführungs- und Kühlmittelabführungsleitung erforderlich ist.

Gemäß einer Weiterbildung der Kühleinrichtung nach der Erfindung kann vorteilhaft der Dämpferschild auf der Außenseite des drehmomentübertragenden Läuferkörpers angeordnet sein und kann sich zwischen dem Dämpferschild und dem drehmomentübertragenden Läuferkörperteil der hohlzylindrische Körper aus festem Isolationsmaterial befinden. Bei dieser Gestaltung entfällt die Dauerbelastung des Isolationskörpers durch das Nennmoment. Außerdem ist das Kühlsystem zur Kühlung des Dämpferschildes besonders einfach zu installieren.

Weitere vorteilhafte Ausgestaltungen der Kühleinrichtung nach der Erfindung gehen aus den restlichen Unteransprüchen hervor.

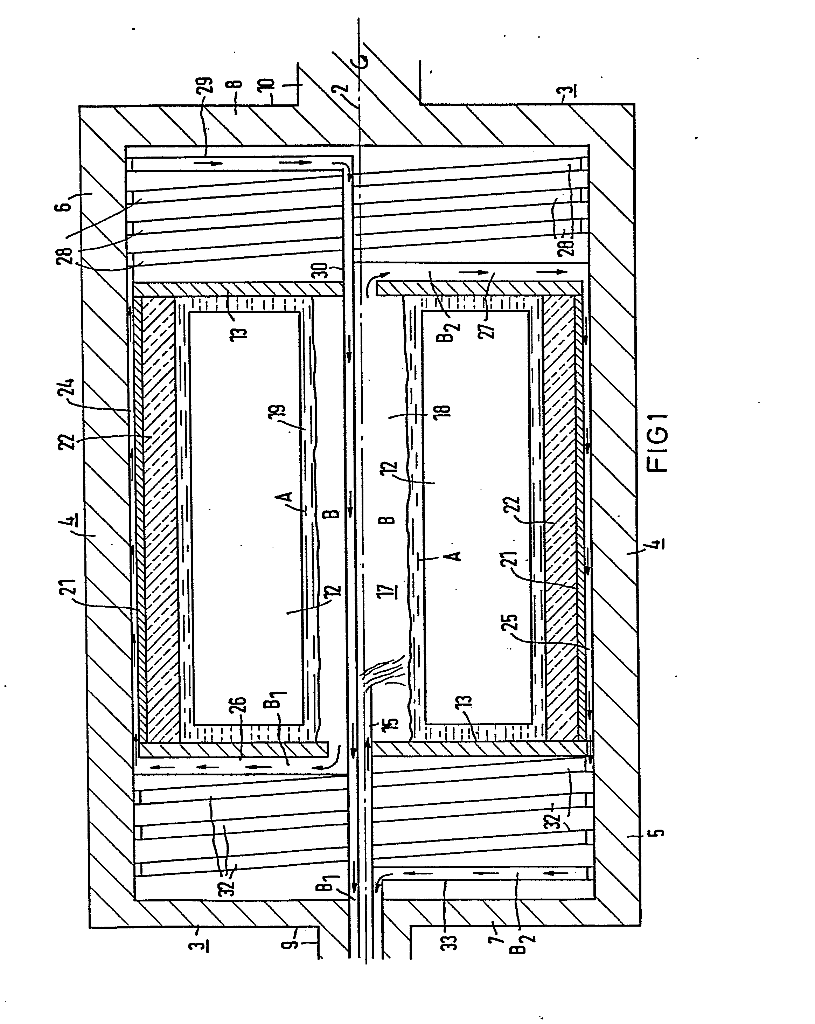

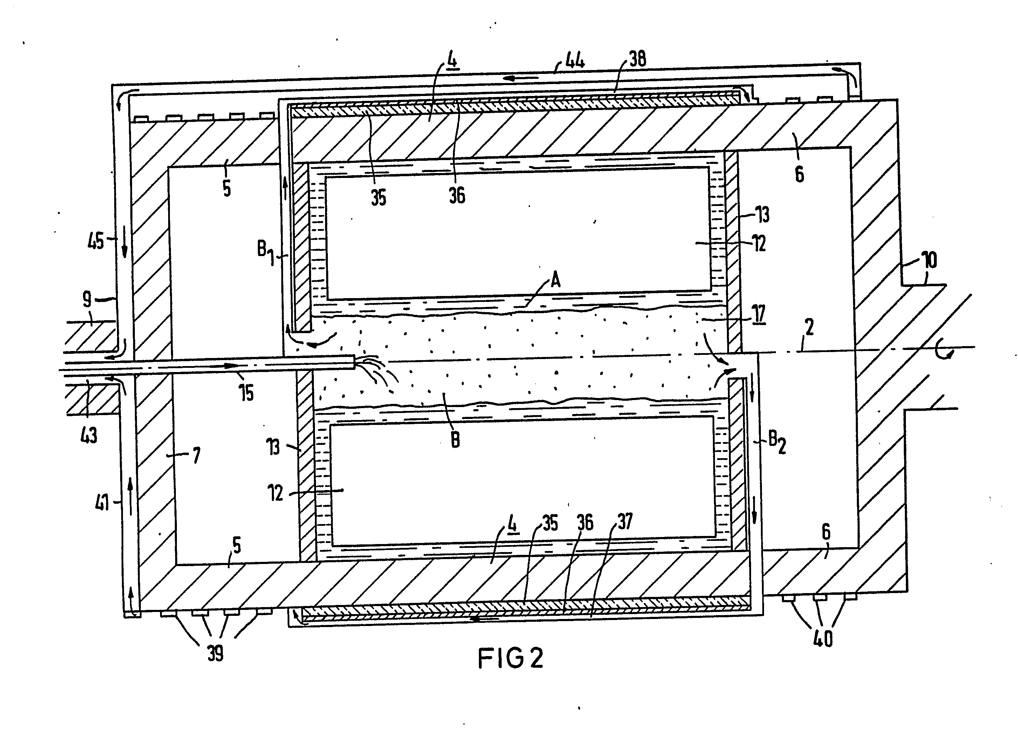

Zur weiteren Erläuterung der Erfindung und deren in den Unteransprüchen gekennzeichneten Weiterbildungen wird auf die Zeichnung Bezug genommen, in deren Fig. 1 schematisch ein Läufer mit einer Kühleinrichtung gemäß der Erfindung veranschaulicht ist. Fig. 2 zeigt schematisch ein weiteres Ausführungsbeispiel einer solchen Kühleinrichtung.

In Fig. 1 ist die Führung eines Kühlmittels durch den Läufer einer elektrischen Maschine, insbesondere eines Turbogenerators, in einem Längsschnitt angedeutet. Die in der Figur nicht näher ausgeführten Läuferteile können beispielsweise Teilen einer Maschine entsprechen, die aus der DE-OS 24 39 719 bekannt ist. Der Läufer enthält einen um eine Achse 2 drehbar gelagerten Läuferkörper 3 mit einem hohlzylindrischen, drehmomentübertragenden Läuferkörperteil 4. Die stirnseitigen Endstücke 5 und 6 dieses Läuferkörperteiles 4 sind mit scheibenförmigen Stirnwänden 7 und 8 verbunden. Die sich in radialer Richtung erstreckende Stirnwand 7 befindet sich dabei an der mit 9 bezeichneten Anschlußkopfseite der Maschine, während die andere Stirnwand 8 an der Turbinenseite 10 der Maschine angeordnet ist. Die Leiter einer in der Figur nicht ausgeführten supraleitenden Erregerwicklung 12 sind in einem innerhalb des drehmomentübertragenden Läuferkörperteiles 4 angeordneten Wicklungsträger 13, beispielsweise in Nuten, untergebracht. Sie enthalten supraleitendes Material. Als kryogenes Kühlmittel wird flüssiges Helium verwendet. Zur Kühlung der supraleitenden Erregerwicklung 12 ist zweckmäßig ein Kühlkreislauf vorgesehen, in dem der bekannte Selbstpump-Effekt ausgenutzt wird.

Das erforderliche Helium wird bei unterkritischem Druck, d.h. z.B. im normalsiedenden Zustand bei Normaldruck oder geringem Überdruck von beispielsweise $1,1 \times 10^5$ Pa und einer Temperatur von etwa 4,4 K, einer in der Figur nicht dargestellten Kühlmittelversorgungseinrichtung entnommen und über eine Heliumkupplung an einem nicht näher ausgeführten Anschlußkopf in den Läufer eingeleitet. Mit Hilfe einer solchen Heliumkupplung, die beispielsweise aus der Veröffentlichung "Siemens Forschungs- und Entwicklungsberichte", Band 5 (1976), Nr. 1, Seite 13 bekannt ist, wird dabei das Kühlmittel von feststehenden auf rotierende Maschinenteile überführt. Das Kühlmittel gelangt so in eine sich im Zentrum des Läuferkörpers in axialer Richtung erstreckende, mitrotierende, rohrförmige Zuführungsleitung 15, die in einen zentral angeordneten Kühlmittelraum 17 mündet.

Aufgrund einer Wärmeeinleitung von außen und auch durch die in den Wicklungsteilen der Erregerwicklung 12 entstehenden Verlustleistungen verdampfen Anteile des zur Kühlung der Erregerwicklung vorgesehenen Heliums. Diese Anteile lagern sich in einem achsnahen, als Dampfraum bezeichneten Bereich 18 des Kühlmittelraumes 17 an. Im Betriebszustand befindet sich in dem Kühlmittelraum 17 ein Zweiphasengemisch von flüssigem Kühlmittel A und gasförmigem Kühlmittel B. Bei Rotation erfolgt unter Einfluß zentrifugaler Kräfte eine Phasentrennung, so daß sich dann das schwerere flüssige Kühlmittel A in einem Flüssigkeitsraum 19 konzentrisch um das in dem der Läuferachse 2 zugewandten Dampfraum 18 gehaltene gasförmige Kühlmittel B anlagert.

Zur Begrenzung der Wechselfeldamplituden an den supraleitenden Leitern der Erregerwicklung 12, beispielsweise im Falle eines Stoßkurzschlusses oder bei Pendelungen, ist die Erregerwicklung 12 von einem mitrotierenden Dämpferschild 21 konzentrisch umgeben. Dieser Dämpferschild ist dabei auf der Innenseite des drehmomentübertragenden hohlzylindrischen Läuferkörperteiles 4 angebracht und wird auf Tieftemperatur gekühlt. In diesem Schild, der vorteilhaft aus einem Material sehr guter thermischer und elektrischer Leitfähigkeit wie z.B. Kupfer besteht, entsteht bei stationärem Generatorbetrieb praktisch keine Verlustwärme. Nur während der verhältnismäßig kurzen transienten Betriebsfälle wird in ihm vorübergehend eine sehr große Verlustwärmemenge frei.

Um eine direkte Wärmeeinleitung von dem Dämpferschild 21 in das die supraleitende Erregerwicklung 12 kühlende flüssige Helium A zu verhindern, ist zwischen dem Dämpferschild und der Erregerwicklung mit deren Kühlkanälen ein hohlzylinderförmiger Isolierkörper 22 angeordnet.

Das zur Kühlung des Dämpferschildes 21 erforderliche Kühlsystem enthält mindestens ein Paar von wenigstens annähernd achsenparallel verlaufenden Dämpferkühlkanälen 24 und 25, die jeweils über mindestens eine radial verlaufende, rohrförmige Anschlußleitung 26 bzw. 27 mit dem Dampfraum 18 des Kühlmittelraumes 17 verbunden sind. Die Anschlußleitung 26 befindet sich dabei an der der Anschlußkopfseite 9 des Läufers zugewandten Stirnseite des Wicklungsträgers 13, während die Anschlußleitung 27 an der gegenüberliegenden, der Turbinenseite 10 zugewandten Stirnseite des Wicklungsträgers verläuft.

Aus dem Dampfraum 18 über die Anschlußleitung 26 in den Kühlkanal 24 des Dämpferschildes 21 eingeleitetes und mit $B_1$ bezeichnetes Kühlmittelabgas wird nach Durchlaufen des Dämpferkühlkanales 24 vorteilhaft noch zur Gegenstromkühlung des an der Turbinenseite 10 befindlichen Endstückes 6 des hohlzylindrischen, drehmomentübertragenden Läuferkörperteiles 4 herangezogen. Hierzu durchläuft es eine spiralförmige Leitung 28 an der Innenseite dieses Endstückes 6, mündet dann über eine radial verlaufende Verbindungsleitung 29 in eine in Achsnähe befindliche Rückführungleitung 30, die von einem konzentrisch um die Achse 2 angeordneten Doppelrohr gebildet wird und zu dem Anschlußkopf des Läufers führt. In entsprechender Weise wird über die radiale Anschlußleitung 27 in den Dämpferkühlkanal 25 eingeleitetes Kühlmittelabgas $B_2$ noch durch eine spiralförmige, mit dem drehmomentübertragenden Endstück 5 des

-12-     VPA 80 P 7 5 3 4 E

hohlzylinderförmigen Läuferkörperteiles 4 thermisch verbundene Leitung 32 sowie eine radial sich erstreckende Verbindungsleitung 33 in die Rückführungsleitung 30 eingespeist. In den spiralförmigen Leitungen 28 und 32 wird ein Großteil der Wärme aufgenommen, die über die drehmomentübertragenden Endstücke 6 und 5 vom warmen Bereich des Läufers in dessen kalten Bereich fließt. Die Strömungsrichtungen des Kühlmittelabgases $B_1$ und $B_2$, die in der Figur durch Pfeile angedeutet sind, verlaufen dabei in den Dämpferkühlkanälen 24 und 25 entgegengesetzt, d.h. von der Erreger- zur Turbinenseite bzw. umgekehrt.

Diese Serienschaltung von Kühlung der Erregerwicklung 12, Kühlung des Dämpferschildes 21 und Kühlung der drehmomentübertragenden Endstücke 5 und 6 des Läuferkörperteiles 4 ist sowohl im stationären Betrieb wie auch bei instationären Betriebsfällen von Vorteil. Die supraleitende Wicklung ist von flüssigem Helium A umgeben und daher besonders gut gekühlt. Im stationären Betrieb gelangt nur wenig Wärme von außen in den Wicklungsbereich, und im Dämpferschild 21 wird praktisch keine Wärme erzeugt. Die kleine verdampfende Heliummenge reicht dabei aus, um den Dämpferschild auf tiefer Temperatur zu halten und die drehmomentübertragenden Endstücke 5 und 6 zu kühlen. Der Heliumgasstrom ist klein, weil der Bereich der supraleitenden Wicklung 12 praktisch von allen Seiten von Flächen umgeben ist, die mit kaltem Heliumgas gekühlt werden. Das Helium wird somit sehr ökonomisch eingesetzt.

Bei den instationären Betriebsfällen wird im allgemeinen in der supraleitenden Wicklung eine vergleichsweise kleine und in dem kalten Dämpferschild eine vergleichsweise große Wärmemenge frei. Die Wicklungskühlung ist dabei sehr wirksam, so daß rasch ein erhöhter Gasstrom entsteht. Die in dem Dämpferschild freigesetzte Wärme ist aber so groß, daß sie auch von dem erhöhten Gasstrom nur zu einem kleineren Teil sofort abgeführt werden kann. Der Rest erwärmt den Dämpferschild 21 und dringt zum Teil auch in den Isolierkörper 22 ein. Im weiteren Verlauf hört dann die Wärmeproduktion in den Supraleitern der Wicklung und in dem Dämpferschild auf. Dämpferschild und Isolierkörper 22 sind aber noch auf erhöhter Temperatur. Sie bilden somit eine Art von Zwischenspeicher für die freigesetzte Wärme. Inzwischen ist auch ein Teil der Wärme durch den Isolierkörper 22 bis an das flüssige Helium A der Erregerwicklung 12 gelangt, so daß auch weiterhin ein erhöhter Heliumgasstrom produziert wird, solange, bis der Isolierkörper und der Dämpferschild 21 wieder auf die tiefere Temperatur des stationären Betriebszustandes abgekühlt sind.

Auf diese Weise wird erreicht, daß bei instationären Betriebsfällen zwar ein erhöhter Gasstrom auftritt. Er ist aber wesentlich kleiner als bei der Kühleinrichtung gemäß dem eingangs genannten EPRI-Bericht, so daß der Druckanstieg in dem zentralen Kühlmittelraum 17 wesentlich geringer bleibt. Außerdem wird insgesamt wesentlich weniger flüssiges Helium benötigt, weil nicht nur die Verdampfungsenthalpie des flüssigen Heliums von ca. 20 Kilojoule/kg, sondern zusätzlich noch die Enthalpie des Heliumgases ausgenutzt wird. Je nach Temperatur des Dämpferschildes gewinnt man dadurch noch zusätzlich etwa 35 Kilojoule/kg bei 10 K, etwa 88 Kilojoule/kg bei 20 K und ca. 140 Kilojoule/kg bei 30 K.

Bei dem Läuferkörper gemäß Fig. 1 wird das Drehmoment über den kalten Dämpferschild 21 und den Isolierkörper 22 in den Wicklungsbereich übertragen. Der Werkstoff, aus dem der Isolierkörper besteht, wird dabei festigkeitsmäßig stark beansprucht. Gegebenenfalls kann er durch besondere Materialien wie z.B. Glasfasern verstärkt sein. Soll jedoch bei einer Maschine eine starke Beanspruchung dieses Isolierwerkstoffes vermieden werden, so kann eine Anordnung des Isolierkörpers und des Dämpferschildes gemäß der Ausführungsform nach Fig. 2 vorgesehen werden. In dieser Figur sind mit Fig. 1 übereinstimmende Bauteile mit denselben Bezugszeichen versehen.

Abweichend von der Ausführungsform nach Fig. 1 sind bei dem Läufer nach Fig. 2 der Dämpferschild und Isolierkörper nicht auf der Innenseite des hohlzylindrischen, drehmomentübertragenden Läuferkörperteiles $\underline{4}$ angeordnet, sondern befinden sich außerhalb dieses Läuferkörperteiles. Dementsprechend ist auf der Außenseite dieses Läuferkörperteiles $\underline{4}$ ein Isolierkörper 35 angeordnet, der von einem zu kühlenden Dämpferschild 36 umschlossen ist. Die mit 37 bzw. 38 bezeichneten Kühlkanäle für diesen Dämpferschild befinden sich ebenfalls außerhalb des drehmomentübertragenden Läuferkörperteiles $\underline{4}$. Sie münden in spiralförmige und außerhalb der stirnseitigen Endstücke 5 und 6 dieses Läuferkörperteiles verlaufende Kühlleitungen 39 bzw. 40. Zu einer achsnahen Herausführung des in der Kühlleitung 39 aufgewärmten Kühlmittelabgases $B_2$ ist eine radiale Verbindungsleitung 41 vorgesehen, die außerhalb der Stirnwand 7 verläuft und an eine achsnahe Abgasleitung 43 mit ringförmigem Querschnitt angeschlossen ist. In entsprechender
Weise wird das in der Kühlleitung 40 aufgewärmte
Abgas $B_1$ zunächst über eine achsenparallel und
außerhalb des drehmomentübertragenden Läuferkörperteiles 4 verlaufende Verbindungsleitung 44 und dann
über eine weitere radiale Verbindungsleitung 45 an
der Stirnwand 7 in die achsnahe Abgasleitung 43 eingespeist.

Bei der in Fig. 2 dargestellten Ausführungsform
des Läuferkörpers übernimmt der hohlzylinderförmige
drehmomentübertragende Läuferkörperteil 4 teilweise
die Zwischenspeicher-Funktion des Isolierkörpers 22
gemäß Fig. 1. Deshalb kann der Isolierkörper 35
entsprechend dünner dimensioniert sein als der
Isolierkörper 22 gemäß Fig.1.

Die in den Figuren 1 und 2 dargestellten Kühleinrichtungen lassen sich darüber hinaus gut kombinieren
mit einer Anordnung zur Kühlung einer tiefzukühlenden
Erregerwicklung im Läufer einer elektrischen Maschine,
wie sie in der DE-AS 29 20 742 beschrieben ist. Bei
dieser bekannten Kühlanordnung wird im Bereich der
Wicklung im Helium ein Unterdruck erzeugt und stabil
aufrechterhalten, wenn das im Zentrum verdampfte
Helium zur Peripherie geführt wird und dort ein kalter Leitungsteil einen guten thermischen Kontakt zum
flüssigen Helium besitzt. Bei der in den Figuren 1 und
2 dargestellten Kühleinrichtung entspricht die gesamte
Länge der Dämpferkühlkanäle 22, 23 bzw. 37, 38 dem
kalten Leitungsteil gemäß der aus der DE-AS bekannten
Kühlanordnung. Dabei ist die wärmeaustauschende Fläche
vergleichsweise sehr groß, so daß ein guter thermischer
Kontakt zwischen dem kalten Leitungsteil und dem
flüssigen Helium realisiert ist, selbst wenn zwischen den Dämpferkühlkanälen und dem flüssigen Helium ein
Isolierkörper angeordnet ist.

Gemäß den in den Figuren 1 und 2 dargestellten Ausführungsbeispielen von Läuferkörpern mit einer Kühleinrichtung nach der Erfindung wurde angenommen, daß
die Dämpferschilde jeweils mit Paaren von Kühlkanälen
gut thermisch verbunden sind, in denen kaltes Abgas
antiparallel strömt. Dies ist dann zweckmäßig, wenn
das die drehmomentübertragenden Endstücke des Läuferkörpers kühlende Medium zuvor zur Kühlung des Dämpferschildes herangezogen werden soll. Es ist jedoch auch
möglich, eines der beiden drehmomentübertragenden
Endstücke direkt mit dem Heliumdampfraum entnommenem
Kühlmittel zu kühlen und das dort aufgewärmte Kühlmittel aus dem Läuferkörper herauszuleiten, während
nur das andere stirnseitige Endstück des drehmomentübertragenden Läuferkörperteiles von dem Dämpferschild-
Kühlmittel im Gegenstrom gekühlt wird.

Ferner ist es bei der Kühleinrichtung nach der Erfindung
auch möglich, das zur Kühlung des Dämpferschildes aus
dem Dampfraum des Kühlmittelraumes entnommene kalte
Abgas etwa in der zwischen den beiden Stirnseiten
des Läuferkörpers liegenden Mitte in mit dem Dämpferschild thermisch verbundene Kühlkanäle einzuspeisen.
Das Kühlmittelabgas kann dann symmetrisch zur Mittenebene durch Kühlkanäle und die daran angeschlossenen,
mit den drehmomentübertragenden Endstücken thermisch
verbundenen Kühlleitungen geführt werden.

5 Patentansprüche
2 Figuren

<u>Patentansprüche</u>

1. Einrichtung zur Kühlung einer supraleitenden Erregerwicklung im Läufer einer elektrischen Maschine, insbesondere eines Turbogenerators, mit mindestens einem Kühlmittelraum, der im Betriebszustand eine dampfförmige und eine flüssige Phase eines von außerhalb des Läufers zugeführten kryogenen Kühlmittels enthält, mit durch die Erregerwicklung verlaufenden Kühlmittelwegen, die an den von der flüssigen Phase eingenommenen Flüssigkeitsraum des Kühlmittelraumes angeschlossen sind, mit mindestens einer nach außerhalb des Läufers führenden Abgasleitung, die an den von der gasförmigen Phase eingenommenen Dampfraum des Kühlmittelraumes angeschlossen ist und die mit einem stirnseitigen Endstück eines drehmomentübertragenden, hohlzylinderförmigen Läuferkörperteiles thermisch verbunden ist, und mit mindestens einer Kühlmittelleitung längs eines um die Erregerwicklung angeordneten, tiefzukühlenden Dämpferschildes, der im Bereich der supraleitenden Erregerwicklung an dem drehmomentübertragenden Läuferkörperteil angeordnet und der gegenüber der Erregerwicklung durch einen hohlzylindrischen Körper aus festem Isolationsmaterial thermisch isoliert ist, d a d u r c h g e k e n n z e i c h n e t , daß die Kühlmittelleitung (24, 25) des Dämpferschildes (21) ein Teilstück der Kühlmittelabgasleitung ist und daß dieses Teilstück der Kühlmittelabgasleitung in Strömungsrichtung des Kühlmittelabgases ($B_1$, $B_2$) gesehen vor dem mit dem stirnseitigen Endstück (5, 6) des drehmomentübertragenden Läuferkörperteiles (4) thermisch verbundenen Leitungsteil (28, 32) der Kühlmittelabgasleitung angeordnet ist.

2. Kühleinrichtung eines Läufers mit einem Dämpferschild auf der Innenseite des drehmomentübertragenden Läuferkörperteiles, nach Anspruch 1, d a -
d u r c h  g e k e n n z e i c h n e t , daß
der hohlzylindrische Körper (22) aus festem Isolationsmaterial zwischen dem Dämpferschild (21) und der Erregerwicklung (12) angeordnet ist (Fig. 1).

3. Kühleinrichtung eines Läufers mit einem Dämpferschild auf der Außenseite des drehmomentübertragenden
Läuferkörperteiles, nach Anspruch 1, d a d u r c h
g e k e n n z e i c h n e t , daß der hohlzylindrische
Körper (35) aus festem Isolationsmaterial zwischen
dem Dämpferschild (36) und dem drehmomentübertragenden
Läuferkörperteil (4) angeordnet ist (Fig. 2).

4. Kühleinrichtung mit einem Läufer mit zwei stirnseitigen Endstücken eines drehmomentübertragenden
Läuferteiles, die jeweils mit mindestens einer Kühlmittelleitung versehen sind, nach einem der Ansprüche
1 bis 3, d a d u r c h  g e k e n n z e i c h -
n e t ,  daß an dem Dämpferschild (21, 36) mindestens
ein Paar von achsenparallel verlaufenden Kühlmittelleitungen (24, 25; 37, 38) vorgesehen ist mit einer
antiparallelen Strömung des Kühlmittelabgases ($B_1$, $B_2$)
in den Kühlmittelleitungen jedes Paares.

5. Kühleinrichtung mit einem Läufer mit zwei stirnseitigen Endstücken eines drehmomentübertragenden
Läuferteiles, die jeweils mit mindestens einer Kühlmittelleitung versehen sind, nach einem der Ansprüche
1 bis 3, g e k e n n z e i c h n e t  durch eine
Einspeisung von dem Dampfraum des Kühlmittelraumes
entnommenem Kühlmittelabgas in mit dem Dämpferschild
thermisch verbundene Kühlmittelleitungen etwa in der axialen Mitte des Läuferkörpers und durch eine
Strömung des Kühlmittelabgases in diesen Kühlmittelleitungen von der Läufermitte zu den angeschlossenen Kühlmittelleitungen der stirnseitigen,
drehmomentübertragenden Endstücke hin.

FIG 1

FIG2